# EUROPEAN PATENT APPLICATION

(11) **EP 4 407 821 A1**
(43) Date of publication of application: **31.07.2024**
(21) Application number: 23153297.9
(22) Date of filing: 25.01.2023
(51) Int. Cl.: H02G 1/14, H02G 3/06, H02G 15/068, F16B 31/02, H02G 3/32, H02G 15/007

(54) **CLAMPING APPARATUS FOR CABLE CLAMPING APPARATUS OR CABLE GLAND, CABLE CLAMPING APPARATUS INCORPORATING SUCH CLAMPING APPARATUS AND CABLE GLAND INCORPORATING SUCH CLAMPING APPARATUS**

(71) Applicant: CMP Products Limited, St Peters Newcastle upon Tyne Tyne and Wear NE6 1BS (GB)
(72) Inventor: The designation of the inventor has not yet been filed
(74) Representative: Murgitroyd & Company

(57) **Abstract**

A clamping apparatus (24) for a cable cleat (2) or cable gland is disclosed. The clamping apparatus comprises a bolt (22) having a first threaded portion, a nut (26) having a second threaded portion adapted to engage the first threaded portion to apply a clamping force to cables (4) an object, and an indicator device (28). The indicator device (28) provides visual indication that the clamping force exceeds a first predetermined level.

## Description

The present disclosure relates to a clamping apparatus for use with a cable clamping apparatus or a cable gland, and relates particularly, but not exclusively, to a clamping apparatus for use with a cable cleat or for clamping an outer sheath or armour layer of a cable in a cable gland.

Cable cleats are used to clamp cables together and hold the cables in position in the event of a fault current causing the cables to tend to violently move apart from each other. A cable cleat generally comprises a body having first and second body parts hinged together, the first and second body parts having respective flanges which are clamped together by means of a bolt passing through apertures in the flanges and a nut mounted to the bolt by means of mutually engaging threaded parts on the nut and bolt. The clamping force applied to the cables is adjusted by means of the torque applied to the nut, which adjusts the separation of the respective flanges of the first and second body parts.

Known cable cleats suffer from the disadvantage that if excessive clamping force is applied to the cables, insulating material on the external surface of the cables can be damaged, but if insufficient clamping force is applied, the cable cleat can fail to effectively retain the cables in position in the event of a fault current. Aside from fault current situations, if insufficient clamping force is applied, cables can also slip within cable cleats if the cables are under axial loading, such as on vertical cable installations in shafts for example.

Cable glands are used to connect electrical cables to enclosures, and generally comprise a gland body including clamping apparatus for clamping a compressible seal to cause the seal to clamp an outer sheath of the cable and/or clamping apparatus for clamping an armour layer of the cable.

Known cable glands suffer from the disadvantage that if insufficient clamping force is applied, the cable gland may not function correctly, and it may be difficult to determine when inspecting the cable gland whether sufficient clamping force has been applied.

Preferred embodiments seek to overcome one or more of the above disadvantages.

According to an aspect of the present disclosure, there is provided a clamping apparatus comprising:
a first part having a first threaded portion;
a second part having a second threaded portion adapted to engage said first threaded portion to apply a clamping force to an object; and
indicator means for providing a visual indication that said clamping force exceeds a first predetermined level.

By providing indicator means for providing a visual indication that said clamping force exceeds a first predetermined level, this provides the advantage of enabling a determination to be easily made that sufficient clamping force has been applied, thereby enabling more reliable operation of a cable cleat or cable gland incorporating the clamping apparatus.

The clamping apparatus may further comprise at least one first indicator portion, wherein the indicator means provides said visual indication by exposing at least part of at least one said first indicator portion such that said part is visible externally of the clamping apparatus in use.

By providing indicator means which provides said visual indication by exposing at least part of at least one said first indicator portion such that said part is visible externally of the clamping apparatus in use, this provides the advantage of enabling simple operation of the indicator means when the first part is mounted to the second part.

The clamping apparatus may further comprise first cover means for covering at least one said first indicator portion to an extent dependent on said clamping force.

By providing first cover means for covering at least one said first indicator portion to an extent dependent on said clamping force, this provides the advantage of enabling the size of the clamping force to be estimated, and for the application of excessive clamping force to be avoided, thereby improving the reliability of operation of a cable cleat or cable gland incorporating the clamping apparatus.

The first cover means and the first indicator portion may be moveable relative to each other and the clamping apparatus may further comprise first urging means for urging the first indicator means relative to the first cover means towards a condition maximising the extent of exposure of the first indicator means.

The indicator means may be adapted to provide a visual indication that said clamping force exceeds a second predetermined level, wherein the second predetermined level is higher than the first predetermined level.

This provides the advantage of enabling excessive clamping force to be avoided, thereby ensuring more reliable operation of a cable cleat or cable gland incorporating the clamping apparatus.

The clamping apparatus may further comprise preventing means for preventing the clamping force from exceeding a second predetermined level.

This provides the advantage of avoiding application of excessive clamping force, thereby ensuring more reliable operation of a cable cleat or cable gland incorporating the clamping apparatus.

The preventing means may be adapted to limit movement of the first part relative to the second part.

The preventing means may comprise at least one third part for causing movement of said first part relative to said second part and preventing movement of said first part relative to said second part when said clamping force exceeds said second predetermined level.

By providing at least one third part for causing movement of said first part relative to said second part and preventing movement of said first part relative to said second part when said clamping force exceeds said second predetermined level, this provides the advantage of simplifying construction and operation of the clamping apparatus.

At least one said third part may be adapted to cause movement of said first part relative to said second part by means of engagement of at least one protrusion and/or recess on the third part with a corresponding recess and/or protrusion on the first part or second part wherein said protrusions and/or recesses do not transmit torque via the corresponding recesses and/or protrusions when said clamping force exceeds said second predetermined level.

The preventing means may be adapted to limit movement of the first part relative to the second part by means of abutment of the first part against the second part.

This provides the advantage of enabling abutment of the first part against the second part to simultaneously provide a visual indication that a sufficient clamping force has been applied, while avoiding application of an excessive clamping force.

According to another aspect of the present invention, there is provided a cable gland comprising at least one seal, and a clamping apparatus as defined above for clamping at least one said seal to bring the seal into engagement with a cable extending through the cable gland.

According to a further aspect of the present disclosure, there is provided a cable gland including a clamping apparatus as defined above for clamping an armour layer of a cable extending through the cable gland.

According to a further aspect of the present disclosure, there is provided a cable clamping apparatus for clamping at least one cable, the cable clamping apparatus comprising a first body part pivotably mounted to a second body part to form a body adapted to engage at least one cable, and a clamping apparatus as defined above for moving the first body part relative to the second body part.

Preferred embodiments will now be described, by way of example only and not in any limitative sense, with reference to the accompanying drawings, in which:-
Figure 1 is a side cross-sectional view of a cable cleat of a first embodiment in which a clamping apparatus is in an uncompressed state;
Figure 2 is a side cross-sectional view of the clamping apparatus of Figure 1 in a compressed state;
Figure 3 is a perspective view of the clamping apparatus of Figure 2 in an uncompressed state;
Figure 4 is a perspective view of the clamping apparatus of Figure 2 in a compressed state;
Figure 5 is a perspective view of the clamping apparatus of Figure 2 in an over compressed state;
Figure 6 is a partially cut away perspective view a clamping apparatus of a second embodiment in a compressed state;
Figure 7 is an exploded view of the clamping apparatus of Figure 6;
Figure 8 is a side cross-sectional view of a ratchet mechanism of the clamping apparatus of Figure 6;
Figure 9 is a side view of the clamping apparatus of Figure 6 in a compressed state;
Figure 10 is a side view of the clamping apparatus of Figure 6 in an uncompressed state;
Figure 11 is a partially cut away side view of a conventional cable gland having clamping apparatus in an uncompressed state;
Figure 12 is a partially cut away side view of the conventional cable gland of Figure 11 having clamping apparatus in a compressed state;
Figure 13 is a partially cut away side view of a cable gland of a third embodiment having clamping apparatus in an uncompressed state;
Figure 14 is a partially cut away side view of the cable gland of Figure 13 having clamping apparatus in a compressed state;
Figure 15 is a side view of a compression spring of the cable gland of Figure 13 in an uncompressed state;
Figure 16 is a side view of the compression spring of Figure 15 in a compressed state;
Figure 17 is a partially cut away side view of a cable gland of a fourth embodiment having clamping apparatus in an uncompressed state;
Figure 18 is a partially cut away side view of the cable gland of Figure 17 having clamping apparatus in a compressed state;
Figure 19 is a perspective view of a ratchet part of the cable gland of Figure 17;
Figure 20 is a perspective view of an outer nut of the cable gland of Figure 17;
Figure 21 is partially cut away side view of a cable gland of a fifth embodiment having clamping apparatus in an uncompressed state;
Figure 22 is partially cut away side view of the cable gland of Figure 21 having clamping apparatus in a compressed state;
Figure 23 is partially cut away side view of part of a cable gland of a sixth embodiment having clamping apparatus in an uncompressed state;
Figure 24 is partially cut away side view of the part of the cable gland of Figure 23 having clamping apparatus in a compressed state;
Figure 25 is a perspective view of a clamping part of the cable gland of Figure 23 in an uncompressed state;
Figure 26 is a perspective view of the clamping part of Figure 25 in a compressed state;
Figure 27 is partially cut away side view of part of a cable gland of a seventh embodiment having clamping apparatus in an uncompressed state; and
Figure 28 is partially cut away side view of the part of the cable gland of Figure 27 having clamping apparatus in a compressed state.

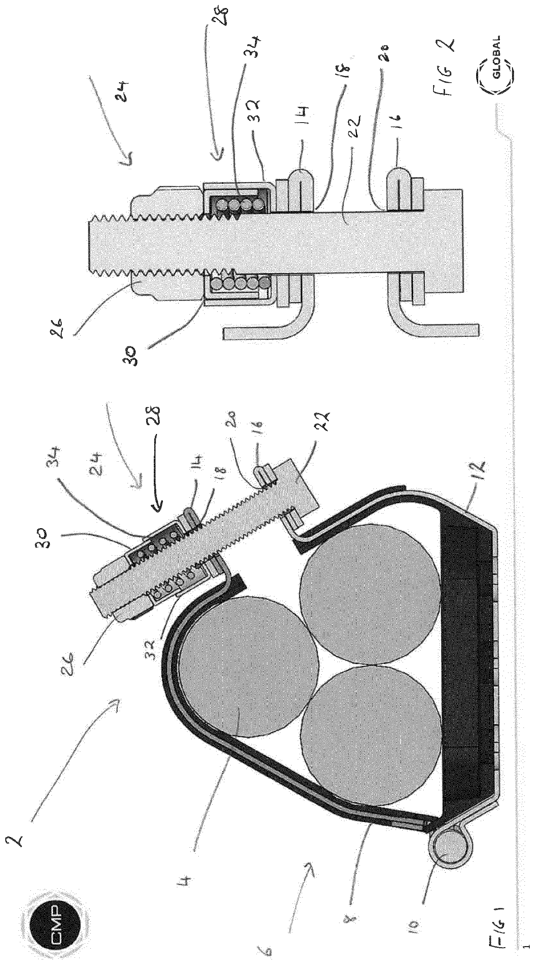

Referring to Figures 1 to 5, a cable cleat 2 for securing three cables 4 in a trefoil arrangement has a body 6 comprising a first body part 8 pivotably connected via a hinge 10 to a second body part 12. The first 8 and second 12 body parts have respective flanges 14, 16 provided with respective apertures 18, 20 for receiving a bolt 22 of a clamping apparatus 24 which also includes a tightening nut 26 and indicator means in the form of an indicator device 28. The indicator device 28 has a first indicator portion 30 and cover means in the form of a cover part 32 adapted to slidably receive the first indicator portion 30, which is urged outwardly of the cover part 32 by means of urging means in the form of a compression spring 34, such that the extent to which the indicator portion 30 protrudes from the cover part 32 is determined by the amount of compression of the compression spring 34, which is in turn dependent upon the clamping force applied to the cables 4 by means of the nut 26 and bolt 22.

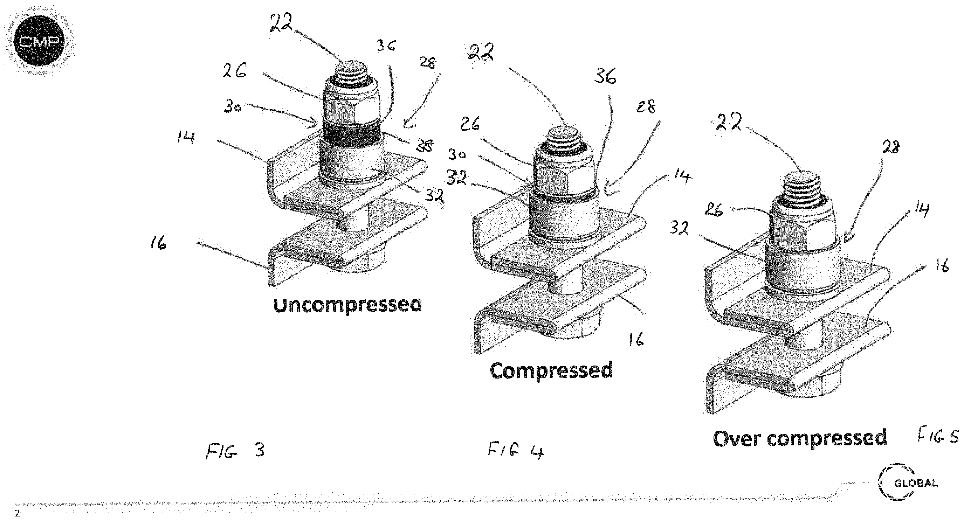

As can be seen in Figures 3 to 5, the first indicator portion 30 has visual indicators in the form of first 36 and second 38 differently coloured regions. In an uncompressed state of the indicator device 28, both of the coloured regions 36, 38 are visible externally of the indicator device 28. As the nut 26 is tightened on the bolt 22, when the clamping force reaches a first predetermined value, the first indicator portion 30 is located within the cover part 32 to such an extent that only the first coloured region 36 is visible, and the second coloured 38 region is obscured by the cover part 32. This indicates that a sufficient clamping force is applied to the cables 4, but not an excessive clamping force. As the nut 26 is further tightened on the bolt 22, the compression spring 34 compresses further, such that the indicator portion 30 is located further inside the cover part 32 so that neither the first 36 nor second 38 coloured region is visible. This indicates that an excessive clamping force is applied.

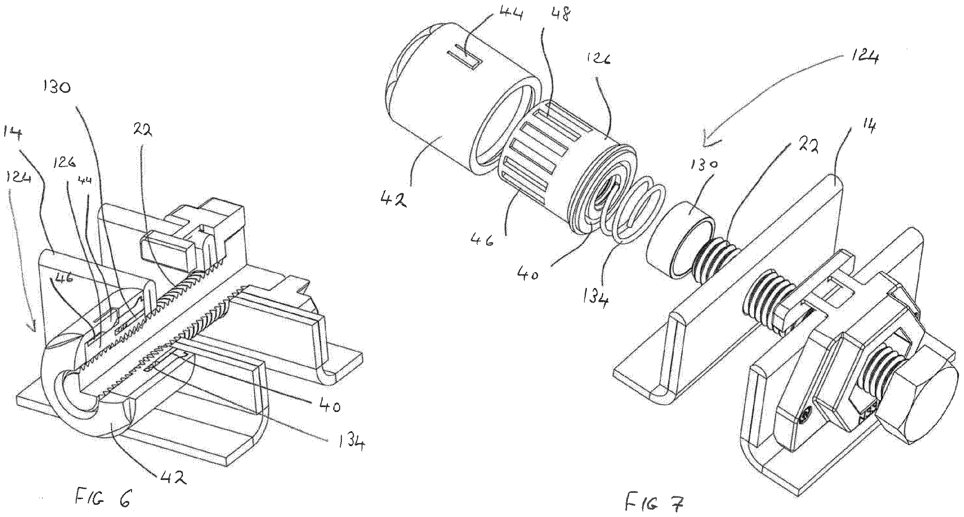

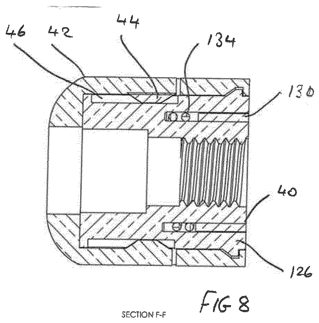

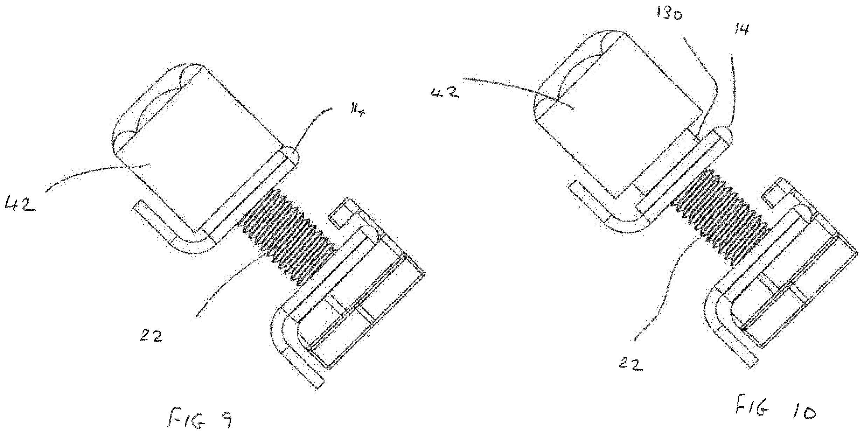

Referring to Figures 6 to 10, a clamping apparatus 124 of a second embodiment is shown, in which parts common to the embodiment of Figures 1 to 5 are denoted by like reference numerals but increased by 100. The clamping apparatus 124 has an internally threaded nut 126 for engaging bolt 22, wherein the indicator portion 130 and compression spring 134 are received in an annular groove 40 in the nut 126 such that the compression spring 134 urges the nut 126 away from flange 14 to make indicator portion 130 visible if the nut is not located far enough along bolt 22 for its position to correspond to a sufficiently high applied clamping force.

The nut 126 is rotated relative to the bolt 22 by means of prevention means in the form of an outer nut 42, which has resilient protrusions 44 which engage axial recesses 46 in the nut 126, wherein the axial recesses 46 have inclined side surfaces 48. When the torque applied to the nut 126 reaches a second predetermined level, higher than the first predetermined level, the resilient protrusions 44 on outer nut 42 flex and slide out along the side surfaces 48 to disengage the recesses 46 on the nut 126, as a result of which the outer nut 42 rotates relative to the nut 126 and further torque cannot be applied to the nut 126. This prevents excessive clamping force being applied to the cables 4.

When an insufficient clamping force is applied to the cables 4, the nut 126 can be urged outwardly of the flange 14 by the compression spring 134, so that at least part of the indicator portion 130 is visible to a user of the clamping apparatus 124. This then indicates to the user that insufficient clamping force is being applied for correct operation of the cable cleat 2. As the nut 126 is tightened on the bolt 22, the compression spring 134 becomes sufficiently compressed that the indicator portion 130 is no longer visible to a user of the clamping apparatus 124, which then indicates that a sufficient clamping force has been applied to the cables 4.

When the clamping force is increased by further rotation of the outer nut 42, the torque applied to the outer nut 42 becomes so great that the resilient protrusions 44 on outer nut 42 flex and slide out of the recesses 46 on the nut 126, as a result of which the outer nut 42 rotates relative to the nut 126 and further torque cannot be applied to the nut 126.

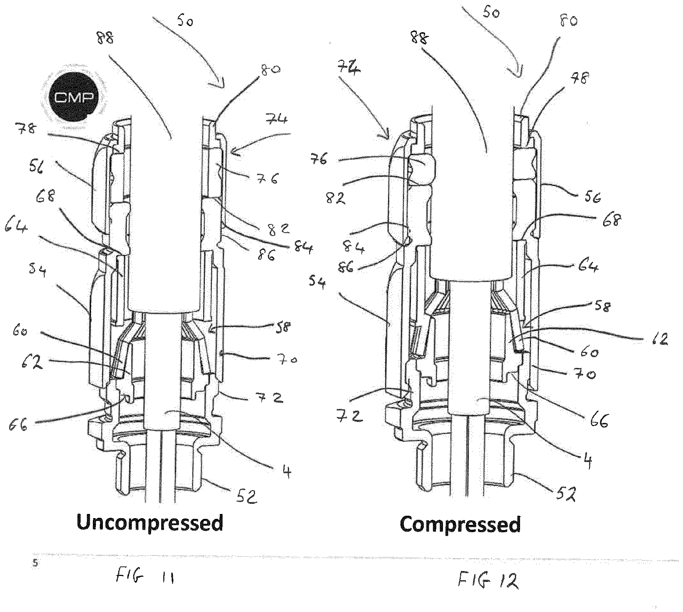

Referring to Figures 11 and 12, a conventional cable gland 50 for mounting to a cable 4 is shown. The cable gland 2 comprises a gland body having a first part in the form of an entry item 52 for connection to an enclosure (not shown), a second part in the form of a body part 54, and an outer nut 56. The cable gland includes a first clamping apparatus 58 for clamping an armour layer 60 of the cable 4. The first clamping apparatus 58 has a generally frustoconical inner clamping part 62 and a generally annular outer clamping ring 64 for surrounding the clamping part 62 to clamp the armour layer 60 of the cable 4 between the clamping ring 64 and the clamping part 62. The clamping part 62 abuts an abutment surface 66 at an end portion of the entry item 52, and the clamping ring 64 abuts an abutment surface 68 on the body part 54, and clamping of the armour layer 60 between the clamping part 62 and the clamping ring 64 occurs by means of engagement of an inner threaded surface 70 on the body part 54 with an outer threaded surface 72 on the entry item 52.

A second clamping apparatus 74 for applying a clamping force to a compression seal 76 compresses the seal 76 between an end face 78 of a ferrule 80 located in the outer nut 56 and an end face 82 of the body part 54, by means of engagement of an inner threaded surface 84 on the outer nut 56 and an outer threaded surface 86 on the body part 54. This compression of the seal 76 causes the seal 76 to clamp an outer sheath 88 of the cable 4.

The conventional cable gland 50 shown in Figures 11 and 12 suffers from two significant disadvantages. Firstly, because the final position of the clamping ring 64 relative to the clamping part 62 is dependent upon the thickness of the armour layer 60, the final position of the body part 54 relative to the entry item 52 varies, as a result of which it is difficult to determine on inspecting the gland 50 that sufficient clamping force has been applied to the armour layer 60. Secondly, the extent to which the ferrule 80 protrudes from the outer nut 56 is the same, regardless of the extent to which the compression seal 76 is compressed, as a result of which it is difficult to determine from inspecting the gland 50 whether sufficient clamping force has been applied to the outer sheath 88 of the cable 4.

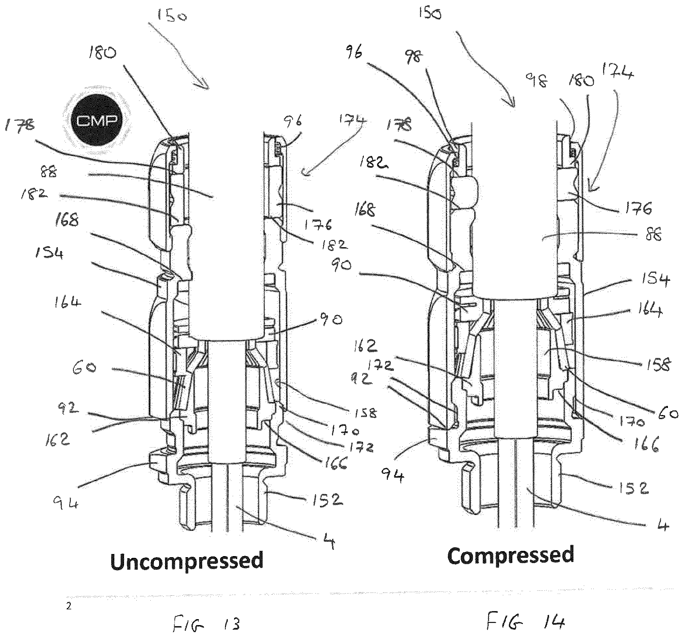

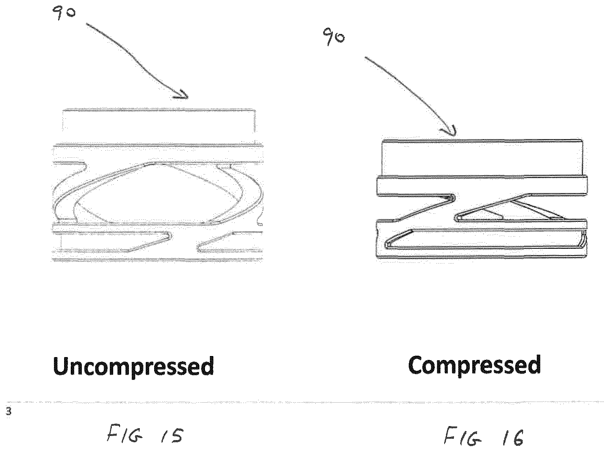

Figures 13 to 16 show a cable gland 150 of a third embodiment, in which parts common to the cable gland of Figures 11 and 12 are denoted by like reference numerals but increased by 100. The cable gland 150 has a first clamping apparatus 158 for clamping an armour layer 60 of the cable 4, the first clamping apparatus having an inner clamping part 162 which abuts an abutment surface 166 on entry item 152, an external clamping ring 164 and a compression spring 90 which acts between the clamping ring 164 and an abutment surface 168 on gland body part 154. As a result, when the body part 154 is tightened onto the entry item to clamp the armour layer 60 between the clamping ring 164 and the clamping part 162, when the clamping ring 164 reaches its maximum downward position as shown in Figure 14, further downward movement of the body part 154 on the entry item 152, by means of engagement of an inner threaded surface 170 on the body part 154 with an outer threaded surface 172 on the entry item 152, can occur as a result of compression of the compression spring 90, regardless of the final position of the clamping ring 164 determined by the thickness of the armour layer 60, until an end face 92 of the body part 154 comes into abutment with a flange 94 on the entry item 152. This provides a visual indication that an adequate clamping force has been applied to the armour layer 60. In addition, abutment of the end face 92 of the body part 154 against flange 94 on the entry item 152 prevents further movement of clamping ring 164 relative to clamping part 162, as a result of which an excessive clamping force cannot be applied to the armour layer 60.

The cable gland 150 also includes a second clamping apparatus 174 for clamping outer sheath 88 of cable 4 by clamping compression seal 176 between end face 182 of body part 154 and end face 178 of ferrule 180 located in outer nut 156 by means of engagement of an inner threaded surface 184 on the outer nut 156 and an outer threaded surface 186 on the body part 154. The ferrule 180 is slidably mounted in outer nut 156 against the action of a compression spring 96. An indicator portion in the form of a coloured area 98 is provided on an outer surface of the ferrule 180, and when an adequate clamping force is applied to the compression seal 176 to displace it radially inwards enough to apply sufficient clamping force to the outer sheath 88 of the cable 4, the coloured area 98 of the ferrule 180 protrudes from an end of the outer nut 156 to provide a visual indication to an inspector that an adequate clamping force is being applied.

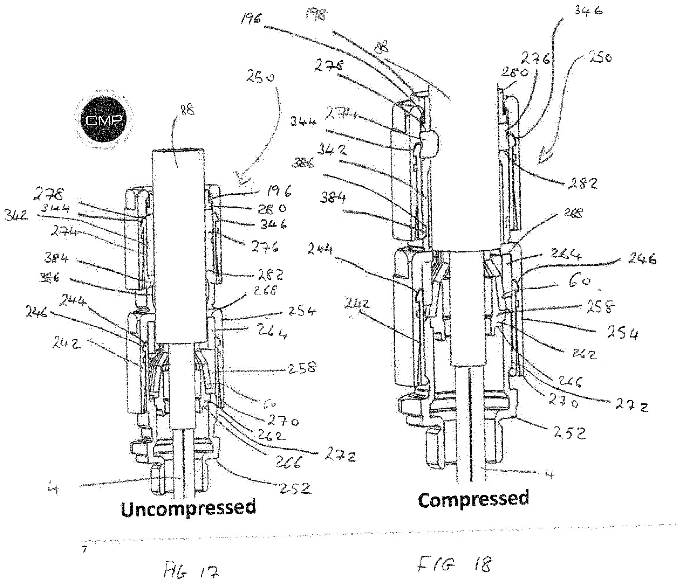

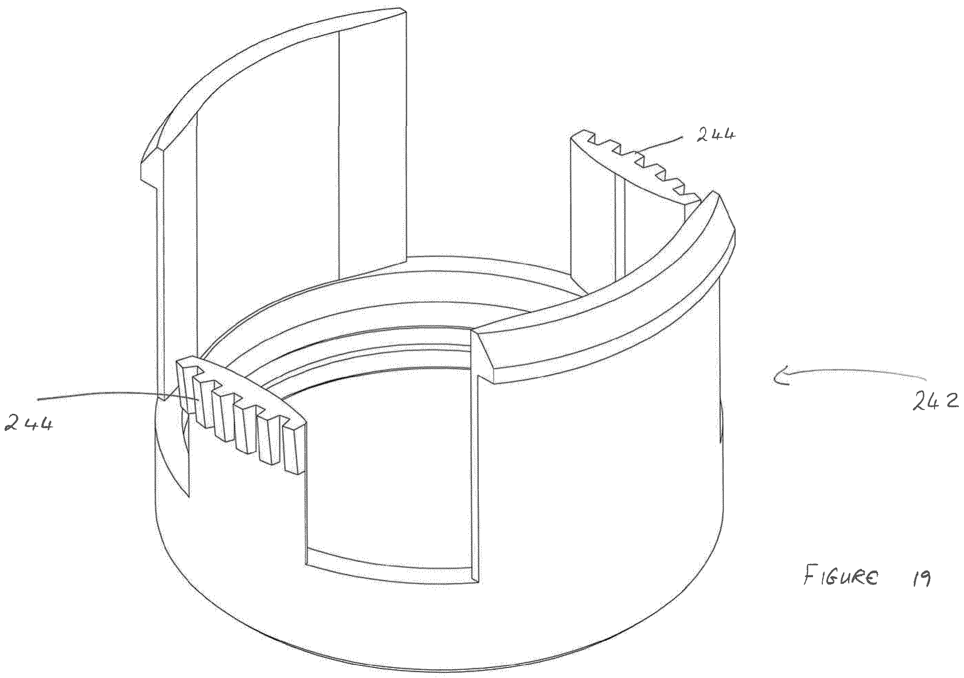

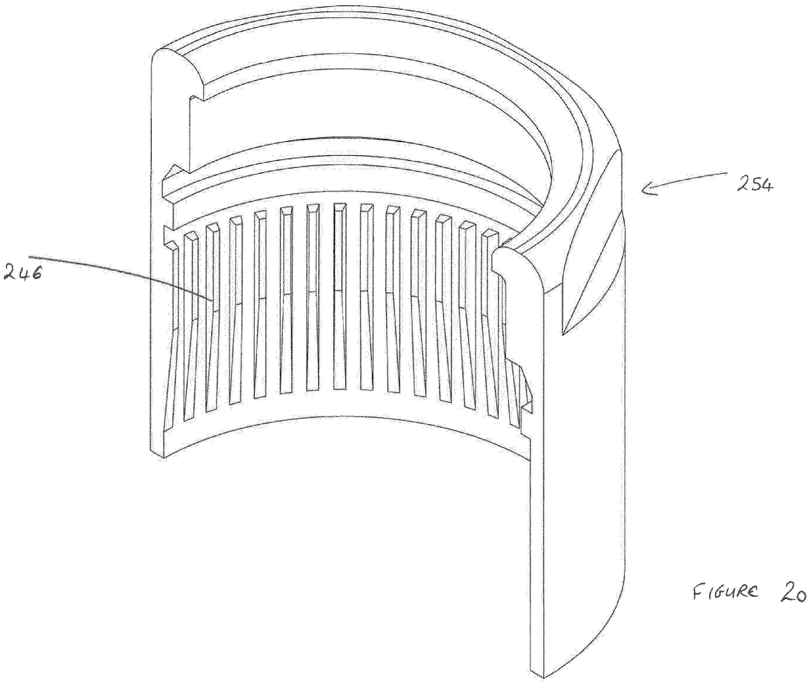

Referring to Figures 17 to 20, a cable gland 250 of a fourth embodiment is shown, in which parts common to the embodiment of Figures 13 to 16 are denoted by like reference numerals but increased by 100. The cable gland has a first clamping apparatus 258 for clamping armour layer 60 of the cable 4, and a second clamping apparatus 274 for clamping outer sheath 88 of the cable 4.

The first clamping apparatus 258 has a clamping part 262 and a clamping ring 264 for surrounding the clamping part 262 to clamp the armour layer 60 of the cable 4 between the clamping ring 264 and the clamping part 262. The clamping part 262 abuts an abutment surface 266 at an end portion of entry item 252, and the clamping ring 264 abuts an abutment surface 268 on body part 254. The first clamping apparatus 258 is provided with prevention means in the form of a ratchet part 242 to prevent application of excessive clamping force to the armour layer 60 by the first clamping apparatus 258. The ratchet part 242 has an inner threaded surface 270 which engages outer threaded surface 272 on entry item 252, and has resilient protrusions 244 extending from its outer surface which engage recesses 246 on inner surface of body part 254.

Clamping force is applied to the armour layer 60 of the cable 4 by rotation of the body part 254 relative to the entry item 252. The ratchet part 242 rotates with the body part 254 as a result of engagement of the protrusions 244 on the ratchet part 242 with the recesses 246 on the internal surface of the body part 254, as long as the applied torque is less than the second predetermined level. This in turn causes the threaded surface 270 on the internal surface of the ratchet part 242 to engage threaded surface 272 on the external surface of the entry item 252, which in turn causes the body part 254 to move axially relative to the entry item 252 to clamp the armour layer 60 between the clamping ring 264 and the clamping part 264. When the armour layer 60 is fully clamped between the clamping ring 264 and the clamping part 262, application of torque at the second predetermined level causes the protrusions 244 on the ratchet part 242 to slide out of the recesses 246 on the body part 254 so that the body part 254 rotates relative to the ratchet part 242 and further torque cannot be applied by the first clamping apparatus 258. When the body part 254 rotates relative to the ratchet part 242, this provides an indication to a user that the maximum applicable torque is applied by the clamping apparatus 258 and that a sufficiently high clamping force is therefore being applied.

The second clamping apparatus 274 clamps outer sheath 88 of cable 4 by clamping compression seal 276 between end face 282 of body part 254 and end face 278 of ferrule 280 located in outer nut 256. The ferrule 280 is slidably mounted in outer nut 256 against the action of a compression spring 196. An indicator portion in the form of a coloured area 198 is provided on an outer surface of the ferrule 280, and when an adequate clamping force is applied to the compression seal 276 to displace it radially inwards enough to apply sufficient clamping force to the outer sheath 88 of the cable 4, the coloured area 198 of the ferrule 280 protrudes from an end of the outer nut 256 to provide a visual indication to an inspector that an adequate clamping force is being applied.

The second clamping apparatus 274 is also provided with prevention means in the form of ratchet part 342 to prevent application of excessive clamping force to the compression seal 276. The ratchet part 342 has an inner threaded surface 384 which engages outer threaded surface 386 on body part 254, and has resilient protrusions 344 extending from its outer surface which engage recesses 346 on inner surface of outer nut 256.

Clamping force is applied to the compression seal 276 by rotation of the outer nut 256 relative to the body part 254. The ratchet part 342 rotates with the outer nut 256 as a result of engagement of the protrusions 344 on the ratchet part 342 with the recesses 346 on the internal surface of the outer nut 256, as long as the applied torque is less than the second predetermined level. This in turn causes the threaded surface 384 on the internal surface of the ratchet part 342 to engage threaded surface 286 on the external surface of the body part 254, which in turn causes the body part outer nut 256 to move axially relative to the body part 254 to clamp the compression seal 276 between the body part 254 and the ferrule 280. When the compression seal 276 fully clamped between the body part 254 and the ferrule 280, application of torque at the second predetermined level causes the protrusions 344 on the ratchet part 342 to slide out of the recesses 346 on the outer nut 256 so that the outer nut 256 rotates relative to the ratchet part 342 and further torque cannot be applied by the second clamping apparatus 274. When the outer nut 256 rotates relative to the body part 254, this provides an indication to a user that the maximum applicable torque is applied by the second clamping apparatus 274 and that a sufficiently high clamping force is therefore being applied.

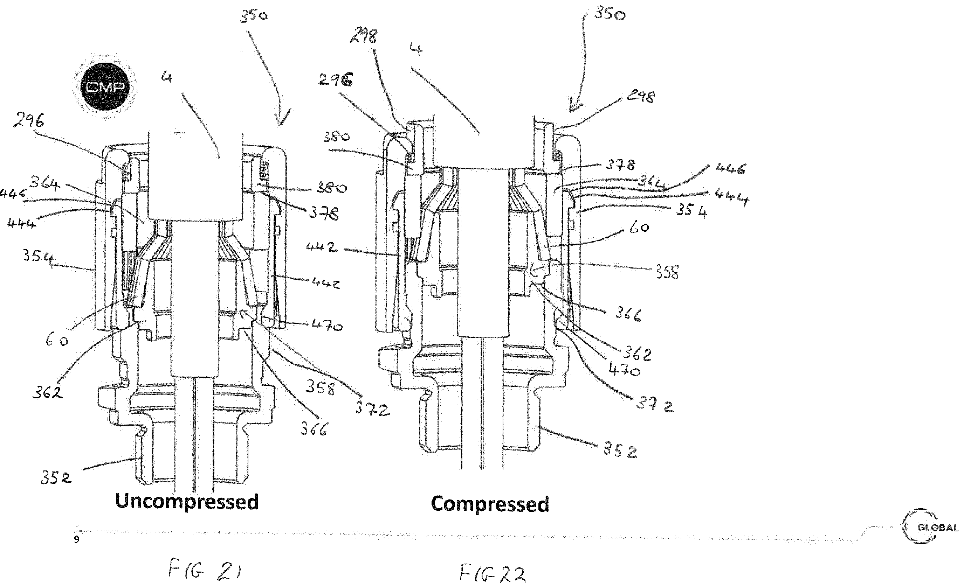

A cable gland 350 of a fifth embodiment is shown in Figures 21 and 22. The cable gland 350 has a first clamping apparatus 358 for clamping armour layer 60 of the cable 4. The first clamping apparatus 358 has a clamping part 362 and a clamping ring 364 for surrounding the clamping part 362 to clamp the armour layer 60 of the cable 4 between the clamping ring 364 and the clamping part 362. The clamping part 362 abuts an abutment surface 366 at an end portion of entry item 352, and the clamping ring 364 abuts end face 378 of ferrule 380 located in an end part of body part 354. The ferrule 380 is slidably mounted in body part 354 against the action of compression spring 296. An indicator portion in the form of a coloured area 298 is provided on an outer surface of the ferrule 380, and when an adequate clamping force is applied to the armour layer 60 of the cable 4, the coloured area 298 of the ferrule 380 protrudes from an end of the body part 354 to provide a visual indication to an inspector that an adequate clamping force is being applied.

The first clamping apparatus 358 is provided with prevention means in the form of a ratchet part 442 to prevent application of excessive clamping force to the armour layer 60 by the first clamping apparatus 358. The ratchet part 442 has an inner threaded surface 470 which engages outer threaded surface 372 on entry item 352, and has resilient protrusions 444 extending from its outer surface which engage recesses 446 on inner surface of body part 354.

Clamping force is applied to the armour layer 60 of the cable 4 by rotation of the body part 354 relative to the entry item 352. The ratchet part 442 rotates with the body part 354 as a result of engagement of the protrusions 444 on the ratchet part 442 with the recesses 446 on the internal surface of the body part 354, as long as the applied torque is less than the second predetermined level. This in turn causes the threaded surface 370 on the internal surface of the ratchet part 442 to engage threaded surface 372 on the external surface of the entry item 352, which in turn causes the body part 354 to move axially relative to the entry item 352 to clamp the armour layer 60 between the clamping ring 364 and the clamping part 362. When the armour layer 60 is fully clamped between the clamping ring 364 and the clamping part 362, application of torque at the second predetermined level causes the protrusions 444 on the ratchet part 442 to slide out of the recesses 446 on the body part 354 so that the body part 354 rotates relative to the ratchet part 442 and further torque cannot be applied by the first clamping apparatus 358. When the body part 354 rotates relative to the ratchet part 442, this provides an indication to a user that the maximum applicable torque is applied by the clamping apparatus 358 and that a sufficiently high clamping force is therefore being applied.

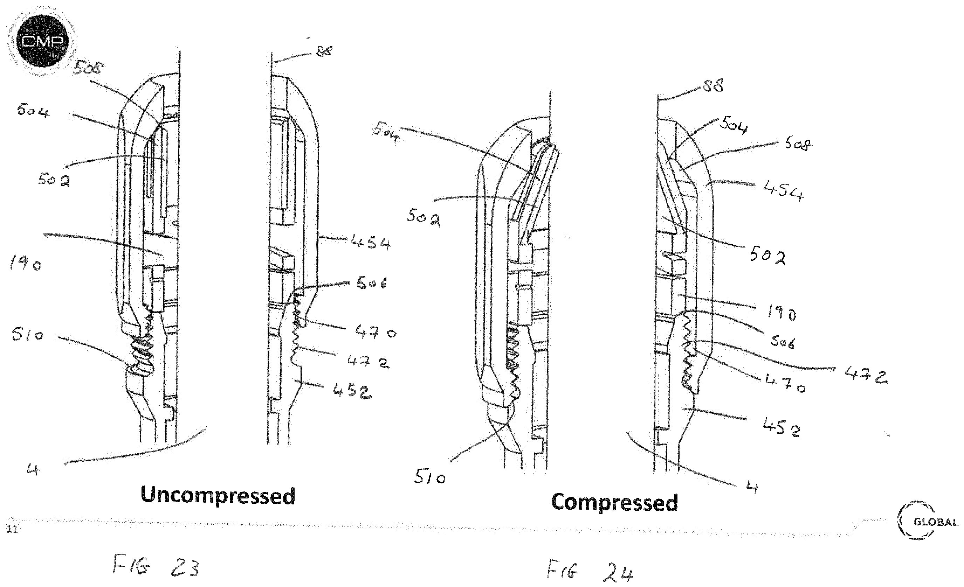

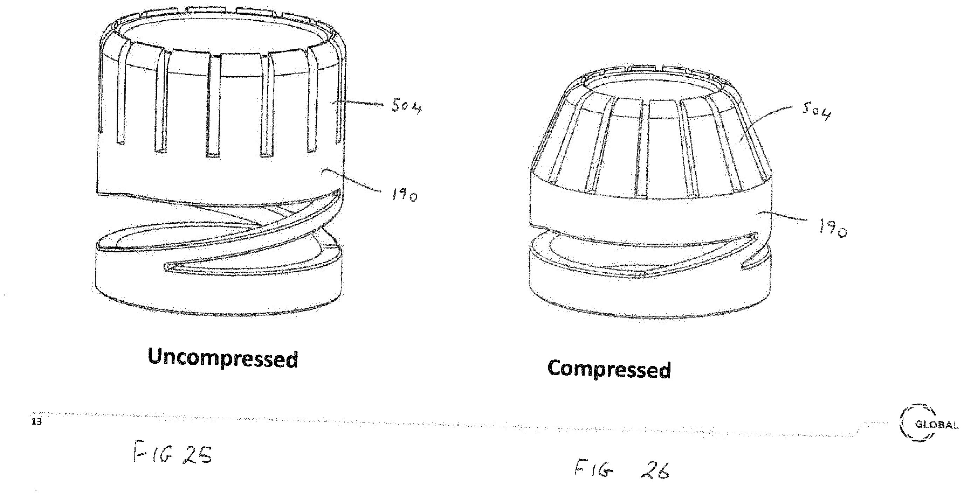

A cable gland 450 of a sixth embodiment is shown in Figures 23 to 26. The cable gland 450 clamps outer sheath 88 of cable 4 by urging a seal 502 into engagement with the cable 4 by means of resilient fingers 504 provided at an upper part of compression spring 190. An end surface 506 of the compression spring 190 opposite to the fingers 504 abuts an end surface of entry item 452. Clamping force is applied to the outer sheath 88 of the cable 4 by rotation of body part 454 relative to entry item 452. This causes threaded surface 470 on the internal surface of the body part 454 to engage threaded surface 472 on the external surface of the entry item 452, which in turn causes the body part 454 to move axially relative to the entry item 452 to cause the resilient fingers 504 to engage an inclined surface 508 on the inside of body part 454. This causes the resilient fingers 504 to deflect inwards towards the cable 4 to urge the seal 502 into contact with the outer sheath 88 of the cable 4. When further torque is applied to the body part 454, the compression spring 190 is compressed until an end surface of the body part 454 engages an abutment portion 510 on the entry item 452 and further movement of the body part 454 relative to the entry item 452 is prevented. When abutment of the body part 454 with the entry item 452 occurs, this provides a visual indication to an inspector that a sufficiently high clamping force has been applied, but application of an excessively clamping force is prevented.

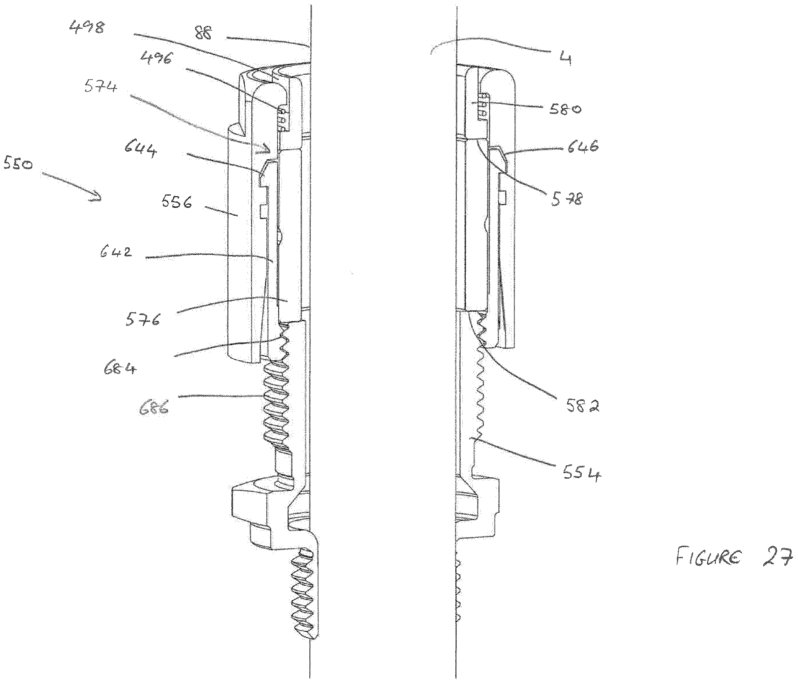

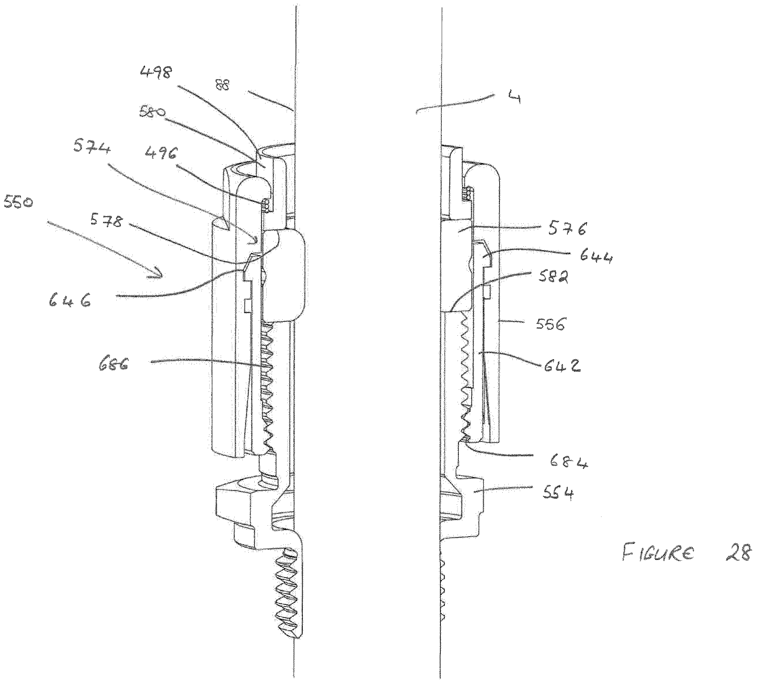

Referring to Figures 27 and 28, a cable gland 550 of a seventh embodiment is shown, in which parts common to the embodiment of Figures 17 to 20 are denoted by like reference numerals but increased by 300. The cable gland 550 has a single clamping apparatus 574 for clamping outer sheath 88 of the cable 4.

The clamping apparatus 574 clamps outer sheath 88 of cable 4 by clamping compression seal 576 between end face 582 of body part 554 and end face 578 of ferrule 580 located in outer nut 556. The ferrule 580 is slidably mounted in outer nut 556 against the action of a compression spring 496. An indicator portion in the form of a coloured area 498 is provided on an outer surface of the ferrule 580, and when an adequate clamping force is applied to the compression seal 576 to displace it radially inwards enough to apply sufficient clamping force to the outer sheath 88 of the cable 4, the coloured area 498 of the ferrule 580 protrudes from an end of the outer nut 556 to provide a visual indication to an inspector that an adequate clamping force is being applied.

The clamping apparatus 574 is provided with prevention means in the form of ratchet part 642 to prevent application of excessive clamping force to compression seal 576. The ratchet part 642 has an inner threaded surface 684 which engages outer threaded surface 686 on body part 554, and has resilient protrusions 644 extending from its outer surface which engage recesses 646 on inner surface of outer nut 556.

Clamping force is applied to the compression seal 576 by rotation of the outer nut 556 relative to the body part 554. The ratchet part 642 rotates with the outer nut 556 as a result of engagement of the protrusions 644 on the ratchet part 642 with the recesses 646 on the internal surface of the outer nut 556, as long as the applied torque is less than the second predetermined level. This in turn causes the threaded surface 684 on the internal surface of the ratchet part 642 to engage threaded surface 586 on the external surface of the body part 554, which in turn causes the body part outer nut 556 to move axially relative to the body part 554 to clamp the compression seal 576 between the body part 554 and the ferrule 580. When the compression seal 576 fully clamped between the body part 554 and the ferrule 580, application of torque at the second predetermined level causes the protrusions 644 on the ratchet part 642 to slide out of the recesses 646 on the outer nut 556 so that the outer nut 556 rotates relative to the ratchet part 642 and further torque cannot be applied by the clamping apparatus 574. When the outer nut 556 rotates relative to the body part 554, this provides an indication to a user that the maximum applicable torque is applied by the clamping apparatus 574 and that a sufficiently high clamping force is therefore being applied.

It will be appreciated by persons skilled in the art that the above embodiments have been described by way of example only and not in any limitative sense, and that various alterations and modifications are possible without departure from the scope of the disclosure as defined by the appended claims.

## Claims

1. A clamping apparatus comprising:
a first part having a first threaded portion;
a second part having a second threaded portion adapted to engage said first threaded portion to apply a clamping force to an object; and
indicator means for providing a visual indication that said clamping force exceeds a first predetermined level.

2. A clamping apparatus according to claim 1, further comprising at least one first indicator portion, wherein the indicator means provides said visual indication by exposing at least part of at least one said first indicator portion such that said part is visible externally of the clamping apparatus in use.

3. A clamping apparatus according to claim 2, further comprising first cover means for covering at least one said first indicator portion to an extent dependent on said clamping force.

4. A clamping apparatus according to claim 3, wherein the first cover means and the first indicator portion are moveable relative to each other and the clamping apparatus further comprises first urging means for urging the first indicator means relative to the first cover means towards a condition maximising the extent of exposure of the first indicator means.

5. A clamping apparatus according to any one of the preceding claims, wherein the indicator means is adapted to provide a visual indication that said clamping force exceeds a second predetermined level, wherein the second predetermined level is higher than the first predetermined level.

6. A clamping apparatus according to any one of the preceding claims, further comprising preventing means for preventing the clamping force from exceeding a second predetermined level.

7. A clamping apparatus according to claim 6, wherein the preventing means is adapted to limit movement of the first part relative to the second part.

8. A clamping apparatus according to claim 7, wherein the preventing means comprises at least one third part for causing movement of said first part relative to said second part and preventing movement of said first part relative to said second part when said clamping force exceeds said second predetermined level.

9. A clamping apparatus according to claim 8, wherein at least one said third part is adapted to cause movement of said first part relative to said second part by means of engagement of at least one protrusion and/or recess on the third part with a corresponding recess and/or protrusion on the first part or second part wherein said protrusions and/or recesses do not transmit torque via the corresponding recesses and/or protrusions when said clamping force exceeds said second predetermined level.

10. A clamping apparatus according to any one of claims 7 to 9, wherein the preventing means is adapted to limit movement of the first part relative to the second part by means of abutment of the first part against the second part.

11. A cable gland comprising at least one seal, and a clamping apparatus according to any one of the preceding claims for clamping at least one said seal to bring the seal into engagement with a cable extending through the cable gland.

12. A cable gland including a clamping apparatus according to any one of the preceding claims for clamping an armour layer of a cable extending through the cable gland.

13. A cable clamping apparatus for clamping at least one cable, the cable clamping apparatus comprising a first body part pivotably mounted to a second body part to form a body adapted to engage at least one cable, and a clamping apparatus according to any one of claims 1 to 10 for moving the first body part relative to the second body part.
